# EUROPÄISCHE PATENTANMELDUNG

(11) **EP 1 477 051 A2**
(43) Veröffentlichungstag der Anmeldung: **17.11.2004**
(21) Anmeldenummer: 04006644.1
(22) Anmeldetag: 19.03.2004
(51) Int. Cl.: A01B 61/04

(54) **Überlastsicherheitseinrichtung für Bodenbearbeitungsgerät**

(30) Priorität: 25.03.2003 DE 10313178
(71) Anmelder: Amazonen-Werke H. Dreyer GmbH & Co. KG, 49205 Hasbergen (DE)
(72) Erfinder: Pokriefke, Michael, 04229 Leipzig (DE)

(57) **Zusammenfassung**

Überlastsicherheitseinrichtung für Bodenbearbeitungsgeräte mit einem das Bodenbearbeitungswerkzeug mit dem Traggestell verbindenden Gelenk, das aus zwei durch Federbelastung zusammengehaltenen und sich gegenseitig abstützenden Gelenkteilen besteht, von denen das eine am Bodenbearbeitungswerkzeug und das andere am Traggestell befestigt sind, wobei an beiden Gelenkteilen zumindest drei als Abstützelemente dienende Kugel und Pfannen im radialen Abstand von der Gelenkmitte und in Umfangsrichtung verteilt angeordnet sind. Um Bodenbearbeitungswerkzeuge, die kompakt und nicht in Fahrtrichtung ausladen ausgebildet sind bzw. sein können, die Voraussetzung zu schaffen, dass sie in vorteilhafter Weise auch seitlich ausweichen können, ist vorgesehen, dass Ebene, die durch die Schwenkpunkte der Gelenkteile verläuft, in Seitenansicht gesehen und auf die Fahrtrichtung bezogen von hinten - oben nach vorn - unten verläuft.

## Beschreibung

Die Erfindung betrifft eine Überlastsicherheitseinrichtung für Bodenbearbeitungsgeräte gemäß des Oberbegriffes des Patentanspruches 1.

Derartige Überlastsicherheitseinrichtungen sind beispielsweise durch die DE 22 26 449 B2 bekannt. Bei dieser Überlastsicherheitseinrichtung verläuft die Ebene, die durch die Schwenkpunkte der Gelenkteile verläuft, in Seitenansicht gesehen, senkrecht, so dass das Bodenbearbeitungsgerät entweder um eine senkrecht verlaufende oder horizontal verlaufende Achse zur Seite oder nach oben schwenkt. Um zu ermöglichen, dass das Bodenbearbeitungswerkzeug beim seitlichen Auftreffen auf im Boden festsitzende Hindernissen zur Seite ausweichen kann, d.h. um die wirksame Federkraft, die die beiden Gelenkteile zusammenhält zu überwinden muss ein ausreichend großer Hebelarm zwischen den Gelenkteilen und dem unteren Teil des Bodenbearbeitungswerkzeug vorhanden sein. Aufgrund der senkrechten Anordnung der Ebene, die durch die Schwenkpunkte der Gelenkteile verläuft ergibt sich eine weit ausladende Bauweise des Bodenbearbeitungsgerätes. Dieses kann bei als Pflügen ausgebildeten Bodenbearbeitungsgeräten akzeptiert werden, hat jedoch erhebliche Nachteile wenn eine derartige Überlastsicherheitseinrichtung bei kurz bauenden Grubbern eingesetzt werden soll. Hier muss dann mit der bekannten Sicherheitseinrichtung die kompakte Bauweise aufgegeben werden. Dies führt zu sehr langen Bodenbearbeitungsgeräten, was aufgrund der Handhabe und Manövrierfähigkeit, insbesondere des Aushebens bei Dreipunktanbaugeräten sehr nachteilig ist.

Der Erfindung liegt die Aufgabe zugrunde, Bodenbearbeitungswerkzeuge, die kompakt und nicht in Fahrtrichtung ausladend ausgebildet sind bzw. sein können, die Voraussetzung zu schaffen, dass sie in vorteilhafter Weise auch seitlich ausweichen können.

Diese Aufgabe wird erfindungsgemäß dadurch gelöst, dass die Ebene die durch die Schwenkpunkte der Gelenkteile verläuft, in Seitenansicht gesehen und auf die Fahrtrichtung bezogen von hinten - oben nach vorn - unten verläuft. Infolge dieser Maßnahme wird in einfacher Weise ein ausreichend großer Hebelarm zwischen den Gelenkteilen und der unteren Spitze des Bodenbearbeitungswerkzeuges erreicht, somit wird ermöglicht, dass bei einem seitlichen Auftreffen des Bodenbearbeitungswerkzeuges auf im Boden festsitzenden Hindernissen das Bodenbearbeitungswerkzeug seitlich ausweichen kann.

Ein vorteilhafter Verlauf der Ebene, die durch die Schwenkpunkte der Gelenkteile verläuft zu dem freien Ende des Bodenbearbeitungswerkzeuges wird dadurch erreicht, dass das vordere freie Ende des Bodenbearbeitungswerkzeuges sich im Abstand hinter der Ebene, die durch die Schwenkpunkte der Gelenkteile verläuft, in Seitenansicht gesehen und auf die Fahrtrichtung bezogen von hinten - oben nach vorn - unten verläuft, befindet.

Versuche haben gezeigt, dass eine kompakte Bauweise mit einem ausreichenden Hebelarm sich dadurch erreichen lässt, dass die Ebene, die durch die Schwenkpunkte der Gelenkteile verläuft in Seitenansicht gesehen und auf die Fahrtrichtung bezogen von hinten - oben nach vorn - unten verläuft um 10° bis 30°, vorzugsweise 15° zur Vertikalen geneigt ist.

Eine vorteilhafte Abstützung der Gelenkteile ergibt sich dadurch, dass vier Abstützelemente vorgesehen sind.

Weitere Einzelheiten der Erfindung sind der Beispielsbeschreibung und den Zeichnungen zu entnehmen. Hierbei zeigen
- Fig. 1: das als Grubber ausgebildete Bodenbearbeitungsgerät mit den die erfindungsgemäße Steinsicherung aufweisenden Bodenbearbeitungselementen,
- Fig. 2: das Bodenbearbeitungselement in Arbeitsstellung in perspektivischer Ansicht,
- Fig. 3: das Bodenbearbeitungselement in Arbeitsstellung in Seitenansicht,
- Fig. 4: das Bodenbearbeitungselement in Arbeitsstellung im Schnitt und in Arbeitsstellung,
- Fig. 5: die an den Träger angebrachte Gelenkseite des Gelenkes in perspektivischer Darstellung,
- Fig. 6: die an dem Bodenbearbeitungswerkzeug angebrachte Gelenkseite in perspektivischer Darstellung,
- Fig. 7: ein weiteres Bodenbearbeitungsgerät im Schnitt, jedoch mit anderer Anordnung der Abstützelemente des Gelenkteiles,
- Fig. 8: das Bodenbearbeitungswerkzeug nach Fig. 7 in der Seitenansicht,
- Fig. 9: die an den Träger angebrachte Gelenkseite des Gelenkes in perspektivischer Darstellung und
- Fig. 10: die an dem Bodenbearbeitungswerkzeug angebrachte Gelenkseite in perspektivischer Darstellung.

Das Bodenbearbeitungsgerät 1 ist als Grubber ausgebildet weist den als Traggestell ausgebildeten Grundrahmen 2 mit den parallel zueinander angeordneten Querträger 3 auf. Auf der Vorderseite des Rahmens 2 ist der Dreipunktanbaubock 4 angeordnet, während auf der Rückseite die Bodenbearbeitungswerkzeuge 5 oder -elemente, des Bodenbearbeitungsgerätes 1 in der Tiefe führende Bodenwalze 6 angeordnet ist. An den Querträgern 3 sind mittels Befestigungselemente 7 die die Steinsicherung 8 aufweisende Bodenbearbeitungswerkzeuge 5 angeordnet. Jedes Bodenbearbeitungswerkzeug 5 ist mit dem Traggestell 2 über ein Gelenk 9 verbunden, das aus zwei durch Federbelastung zusammengehaltene und sich gegenseitig abstützende Gelenkteile 10 und 11 besteht. Eines dieser Gelenkteile 10 ist am Bodenbearbeitungswerkzeug 9 und das andere Gelenkteil 11 am Querträger 3 des Traggestelles 2 befestigt. An beiden Gelenkteilen 10 und 11 sind als Abstützelemente 12 dienende Kugeln 13 und Pfannen 14 im radialen Abstand von der Gelenkmitte 15 und in Umfangsrichtung verteilt angeordnet. Im Ausführungsbeispiel sind die Kugeln 13 dem Gelenkteil 11, welche dem Traggestell 2 zugeordnet angeordnet ist, während die Pfannen an dem Gelenkteil 10, welches dem Bodenbearbeitungswerkzeug 5 zugeordnet ist, angeordnet sind.

Das Bodenbearbeitungswerkzeug 5 weist das Bearbeitungsteil 16, des an einem nach oben ragenden Halter 17 befestigt ist, auf. Dieser Halter 17 ist an einem Zwischenstück 18 befestigt, welches im oberen Bereich eine rohrförmige Hülse 19 aufweist. In dieser rohrförmigen Hülse 19 ist das Federelement 20 angeordnet. Auf der Rückseite des Federelementes 20, welches als Druckfeder ausgebildet ist, greift über ein Abstützelement 21 das als Seil 22 ausgebildete biegsame Zugelement 23 an. Auf seiner Vorderseite ist das Seil 22 über eine Einstellschraube 24 über den Quersteg 24 mit dem vorderen Halter 25 des an dem Traggestell 2 angeordneten Gelenkteiles 11 verbunden. Die Druckfeder 20 liegt an dem Gelenkteil 10 an. Auf der Rückseite der Hülse 19 ist an dieser ein Abdeckelement 27 befestigt, um zu verhindern, falls das Zugelement 23 reist das Teile aufgrund der plötzlichen Entspannung der Feder 20 weggeschleudert werden kann.

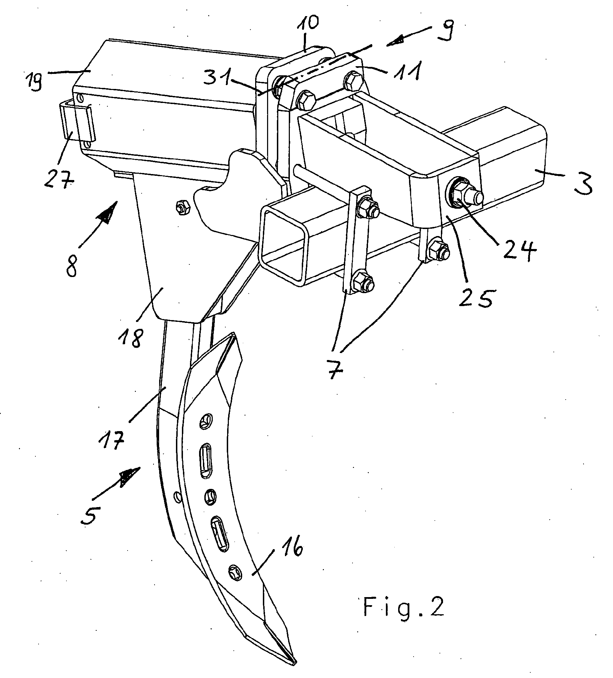

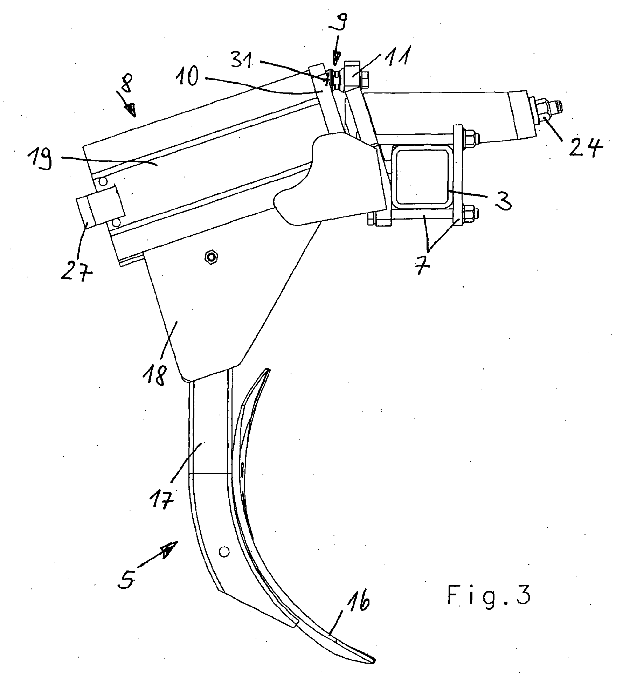

Oberhalb des gespannten Zugelementes 23 ist ein Anlageelement 28 an dem Gelenkteil 11, welches dem Traggestell 2 zugeordnet ist, für das Zugelement 23 angeordnet. In Arbeitsposition des Bodenbearbeitungselementes 5, wie in den Fig. 2 bis 4 dargestellt befindet sich das Anlageelement 28 im Abstand A zu dem Zugelement 23. Das Anlageelement 28 ist an dem Gelenkteil 11 befestigt, an dem das Zugelement 23 und nicht das Federelement 20 befestigt ist. Die Zugrichtungsgerade 29 der aus Feder 20 und Zugelement 23 bestehenden Federbelastungseinrichtung 30 verläuft unterhalb der Mittelebene der Gelenkteile 10 und 11. Dies bedeutet, das die Angriffslinie der Federbelastungseinrichtung 20 unterhalb der Mittelebene der Gelenkteile 10 und 11 verläuft. Hierdurch wird ein größerer wirksamer Hebelarm für die Federbelasteinrichtung 20 vor allem in der Arbeitsposition erreicht.

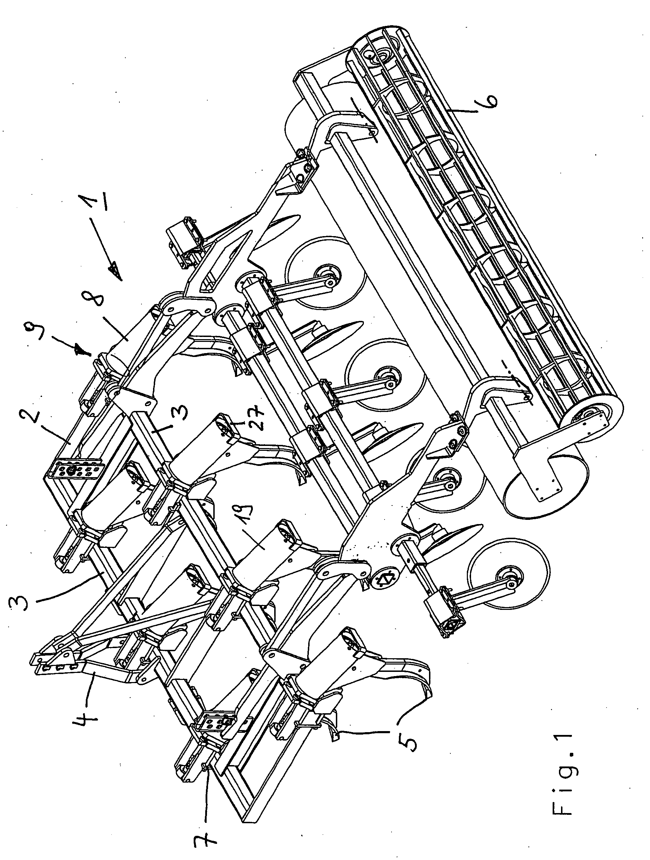

Wenn das Bodenbearbeitungswerkzeug 5 auf im Boden festsitzende Steine oder andere Elemente auftrifft, schwenkt das Bodenbearbeitungswerkzeug 5 um die durch die beiden oberen Abstützelemente 12' verlaufende Schwenkachse 31, gegen die Kraft der Feder 20 der Steinsicherung 8 nach hinten. Nach einem bestimmten Ausschwenkweg des Bodenbearbeitungswerkzeuges 5 nach hinten oben kommt das als Seil 22 ausgebildete Zugelement 23 an dem Anlageelement 28 zur Anlage und verhindert hierdurch das die Federbelastungseinrichtung 20 über den Todpunkt schwenkt und hierbei die Steinsicherung 8 außer Funktion setzen würde. Vielmehr wird hierdurch die wirksame Federkraft des Federelementes 20 aufrecht erhalten. Nach überwinden des im Boden festsitzenden Hindernisses wird das Bodenbearbeitungswerkzeug 5 durch das Zugelement 23 und die hierauf wirkende Federkraft wieder in die in den Fig. 1 bis 4 dargestellte Position zurückgebracht.

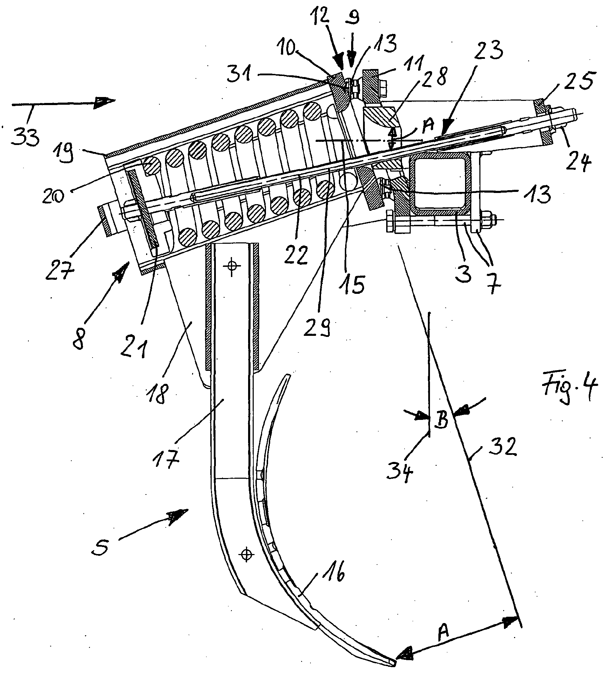

Die Abstützelemente 12 des Gelenkes 9 sind so angeordnet, dass sich eine schiefe Ebene 32 ergibt. Durch diese schiefe Ebene 32, die durch die Schwenkpunkte des Gelenkes 9 verläuft, verläuft in Seitenansicht gesehen und auf die Fahrtrichtung 33 bezogen von hinten nach vorn-unten, wie Fig. 4 zeigt. Das vordere freie Ende 16 des Bodenbearbeitungswerkzeuges 5 beifindet sich im Abstand A hinter der Ebene 32, die durch die Schwenkpunkte der Abstützelemente 12, 12', 12'' des Gelenkes verläuft, in Seitenansicht gesehen und auf die Fahrtrichtung 33 bezogen, von hinten-oben nach vorn-unten, wie Fig. 4 zeigt. Hierdurch ergibt sich der Hebelarm A, der wirksam ist, wenn die Scharspitze 16 auf im Boden festsitzende Hindernisse auftrifft um das Schar 5 seitlich auslenken zu können.

Die Ebene 32, die durch die Abstützelemente 12, 12', 12" des Gelenkes 9 verläuft, verläuft in Seitenansicht gesehen und auf die Fahrtrichtung bezogen von hinten-oben nach vorn-unten um im Winkel B von 10° bis 30°, vorzugsweise 15° zur Vertikalen 34 geneigt.

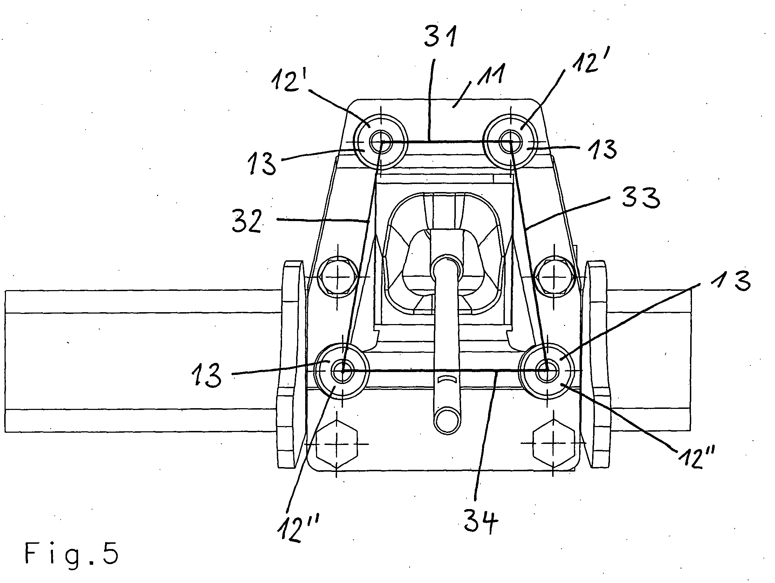

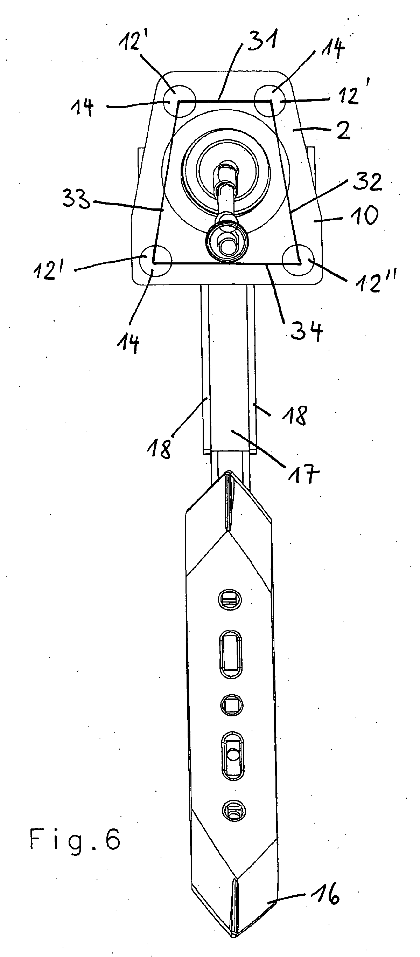

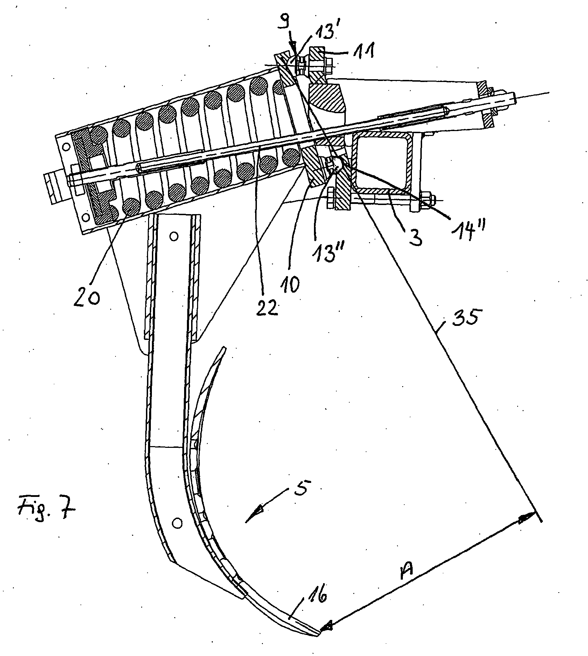

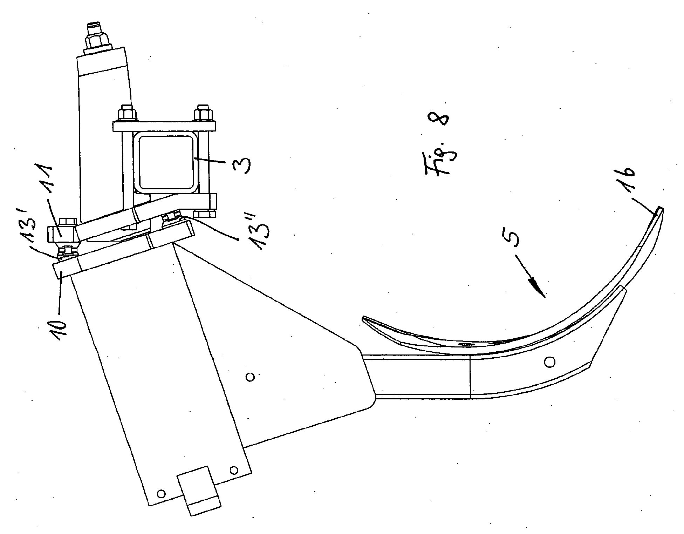

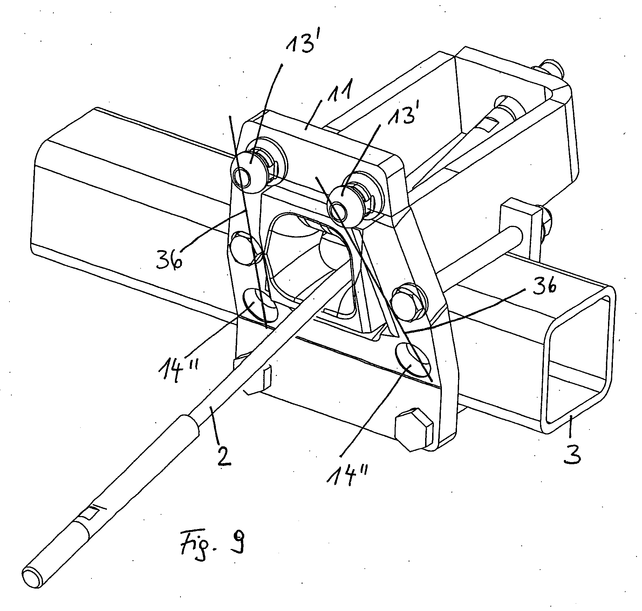

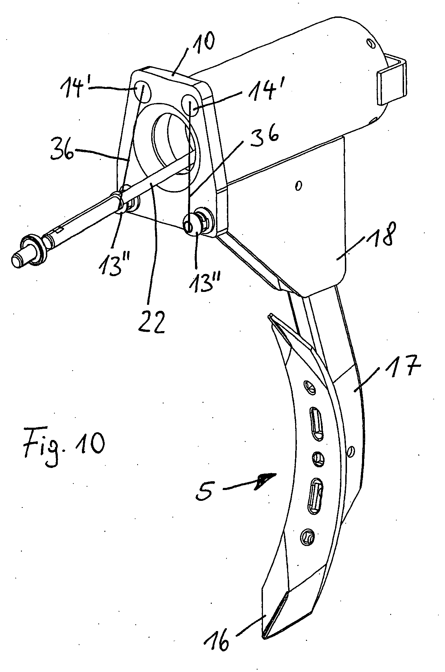

Die Ausführung des Bodenbearbeitungswerkzeuges gemäß den Fig. 7 bis 10 unterscheidet sich von dem Ausführungsbeispiel gemäß den Fig. 1 bis 6 dadurch, dass die Kugeln 13 und Pfannen 14 des Gelenkes 9 anders angeordnet sind. Bei dem Ausführungsbeispiel nach Fig. 7 sind die oberen Kugeln 13' dem an dem Querträger 3 angebrachten Gelenkteil 11 angeordnet und die Pfannen 14', die den oberen Kugeln 13' zugeordnet sind. An dem dem Bodenbearbeitungswerkzeug 5 zugeordneten Teil 10 angeordneten. Die unteren Kugeln 13'' sind an dem dem Bodenbearbeitungswerkzeug 5 zugeordneten Gelenkteil 10 und die Pfannen 14'' an dem an dem Querträger 3 angeordneten Gelenkteil 11 angeordnet. Dadurch ergibt sich eine vorteilhafte schiefe Ebene 35. Hierdurch wird bei einer kompakten Bauweise ein ausreichend großer Hebelarm A zu der Schenkachse 36 und der Scharspitze 16 erreicht. Somit kann auch bei kompakt bauenden Geräten eine seitlich auf die Scharspitze 16 wirkende Kraft ein seitliches Ausweichen des Bodenbearbeitungswerkzeuges 5 ermöglichen.

## Patentansprüche

1. Überlastsicherheitseinrichtung für Bodenbearbeitungsgeräte mit einem das Bodenbearbeitungswerkzeug mit dem Traggestell verbindenden Gelenk, das aus zwei durch Federbelastung zusammengehaltenen und sich gegenseitig abstützenden Gelenkteilen besteht, von denen das eine am Bodenbearbeitungswerkzeug und das andere am Traggestell befestigt sind, wobei an beiden Gelenkteilen zumindest drei als Abstützelemente dienende Kugel und Pfannen im radialen Abstand von der Gelenkmitte und in Umfangsrichtung verteilt angeordnet sind, **dadurch gekennzeichnet, dass** Ebene (32), die durch die Schwenkpunkte der Gelenkteile (12,12'',10,11) verläuft, in Seitenansicht gesehen und auf die Fahrtrichtung (33) bezogen von hinten - oben nach vorn - unten verläuft.

2. Überlasteinrichtung nach Anspruch 1, **dadurch gekennzeichnet, dass** das vordere freie Ende (16) des Bodenbearbeitungswerkzeuges (5) sich im Abstand (A) hinter der Ebene (32), die durch die Schwenkpunkte der Gelenkteile (10,11,12',12'')verläuft, in Seitenansicht gesehen und auf die Fahrtrichtung (33) bezogen von hinten - oben nach vorn - unten verläuft, befindet.

3. Überlastsicherheitseinrichtung nach Anspruch 1, **dadurch gekennzeichnet, dass** die Ebene (32), die durch die Schwenkpunkte der Gelenkteile (10,11,12',12" ) verläuft in Seitenansicht gesehen und auf die Fahrtrichtung (33) bezogen von hinten - oben nach vorn - unten verläuft um 10° bis 30°, vorzugsweise 15° zur Vertikalen (34) geneigt ist.

4. Überlastsicherheitseinrichtung nach Anspruch 1, **dadurch gekennzeichnet, dass** vier Abstützelemente (12' ,12" ) vorgesehen sind.
